# EUROPEAN PATENT SPECIFICATION

(11) **EP 1 734 848 B1**
(45) Date of publication and mention of the grant of the patent: **21.07.2010**
(21) Application number: 04727976.5
(22) Date of filing: 16.04.2004
(51) Int. Cl.: A47J 27/18, A47J 37/12

(54) **MACHINE FOR PREPARING READY-TO-EAT MEALS BASED ON PASTA STARTING FROM PRECOOKED AND DEEP-FREEZED PASTA**
MASCHINE ZUR ZUBEREITUNG VON FERTIGGERICHTEN AUF NUDELBASIS, AUSGEHEND VON VORGEGARTEN UND TIEFGEFRORENEN NUDELN
APPAREIL PERMETTANT LA PREPARATION DE REPAS PRETS A SERVIR A PARTIR DE PATES PRECUITES ET SURGELEES

(43) Date of publication of application: 27.12.2006
(73) Proprietor: ZINI PRODOTTI ALIMENTARI S.r.l., I-20090 Cesano Boscone (Milan) (IT)
(72) Inventor: Vezzani, Corrado, Zini Prodotti Alimentari S.r.l., I-20090 Cesano Boscone (IT)
(74) Representative: Zambardino, Umberto
(86) International application number: PCT/IT2004/000219
(87) International publication number: WO 2005/099532

(56) References cited:
- EP-A- 0 511 945
- WO-A-94/10889
- US-A- 5 365 831
- US-A- 6 063 421

## Description

### Field of Application

The present invention relates to the field of food industry and catering.

In particular, the invention relates to a machine for extemporaneously preparing meals based on pasta, suitable for use within the catering services such as bars, cafés and fast-food restaurants.

### Prior Art

In the technique, different types of machines are known for preparing ready-to-eat meals based on pasta, starting from fresh pasta or pre-cooked and frozen pasta, which allow the preparation of these meals in a more or less automated and fast way.

For example, the Applicant itself, in its patent application EP-A-0 511 945, has described a machine for producing ready-to-eat meals based on pasta, starting from pre-cooked, frozen pasta.

This machine essentially comprises one or more baskets intended for containing pre-dosed amounts of pre-cooked, frozen pasta, a vat containing heated water, means for moving the baskets between an immersion position in the heated water of the vat, wherein the pre-cooked pasta is heated and a position wherein the basket is removed from the vat. The machine also has a device for loading the pasta in the baskets, which is placed on the upper side of the machine body and a fan for conveying the steam generated by the boiling water in a chamber placed in the upper part of the machine body. In this chamber a vessel for sauces is placed, which is kept hot by the steam aspirated from the fan.

The heating of the water contained in the vat is obtained by means of electric resistances arranged inside the vat.

This heating system of the water of the vat is also present in machines described in other patent applications, such as for example in the patent application MI2001A000189 and in the application FI1995A000121.

Going back to the application EP-A-0 511 945 of the Applicant, the machine claimed and described therein, although satisfactory under several points of view, has some drawbacks, the first among all being the formation, in the long run, of deposits on the electric resistances, as well as on the walls and on the bottom of the cooking vat. The cleaning of the vat is fairly difficult in these cases, since it is necessary to disassemble the electric resistances and this operation is not normally easy for staff with poor familiarity with electrical materials and apparatuses, such as the one normally in charge of the preparation of the ready-to-eat meals in bars and cafés.

Moreover, the means for moving the baskets comprise a lever for each basket being pivoted, in correspondence with an end thereof, to the basket and being pivoted, in correspondence with the opposite end, to a disk controlled by an electric motor. This system for moving the baskets is rather complicated and it implies non-negligible realisation and maintenance costs.

Moreover, in case of a continuous use of the machine with big doses of pre-cooked, frozen pasta, the temperature of the heated water can drop well below the operation temperature and, under this situation, relatively long times are required for bringing the water back to the operation temperature through the electric resistances of the machine.

Finally, the placement, on the upper side of the machine body, of the device for loading the pasta in the baskets as well as of the vessel for sauces implies a certain discomfort for the operator during the use of the machine. It is to be noted that the loading of the water in the cooking vat occurs on the upper side of the machine body.

US 6063421 discloses a method and apparatus for final rethermalizing of a pre-cooked food product. The method comprises providing a heating fluid into a heating chamber via a controlled valve, sensing the level of the heating fluid in the heating chamber, controlling the controlled valve to maintain the level of the heating fluid in the heating chamber at a preset level, heating the heating fluid when it has reached a predetermined level, sensing the temperature of the heating fluid in the heating chamber, maintaining the temperature of the heating fluid at a preset temperature, placing the food product into at least one rethermalizing receptacle, moving the rethermalizing receptacle from a first position outside the heating chamber to a second position within the heating chamber to rethermalize the food product when the temperature of the heating fluid is at the preset temperature and the level of the heating fluid is at the preset level, maintaining the rethermalizing receptacle in the second position for a preset period of time while maintaining the preset temperature and the preset level of the heating fluid; and moving the rethermalizing receptacle to the first position after the preset period of time.

The technical problem underlying the present invention is that of providing a machine for producing ready-to-eat meals based on pasta starting from pre-cooked, frozen pasta, which overcomes the drawbacks previously cited with reference to the prior art.

### SUMMARY OF THE INVENTION

This technical problem is solved by a machine for preparing ready-to-eat meals based on pasta starting from pre-cooked, frozen pasta comprising at least one basket" suitable for receiving predetermined doses of pre-cobked, frozen pasta, a cooking vat containing water heated by heating means, means for moving said at least one basket from an immersion position, wherein said at least one basket is immersed in the heated water contained in the cooking vat, for heating the pre-cooked, frozen pasta and at least one raised position, wherein said at least one basket is removed from the cooking vat, characterised in that said heating means are placed on the outer bottom of said cooking vat.

The word "cooking" generally means the operation of heating the pre-cooked, frozen pasta, performed in the cooking vat of the machine, in order to bring said pasta to the optimal cooking conditions for immediate consumption. This heating operation can imply a real cooking of the pre-cooked, frozen pasta, if this latter has been originally frozen without reaching the optimal cooking conditions for the consumption or simply a tempering of the pre-cooked, frozen pasta if this latter has been originally frozen already under optimal cooking conditions for the consumption.

The main advantage of the machine according to the invention stays in the fact that the cleaning an maintaining operations of the cooking vat are made particularly easy and fast by virtue of the fact that the heating electric resistances are placed outside the vat, thus avoiding depositing phenomena on the electric resistances and complicated disassembling operations for cleaning the same.

The characteristics and advantages of the machine according to the present invention will be more apparent from the following description of a preferred embodiment thereof, made with reference to the herewith annexed drawings and given by way of illustrative and non-limiting example.

### BRIEF DESCRIPTION OF THE DRAWINGS

In the drawings:

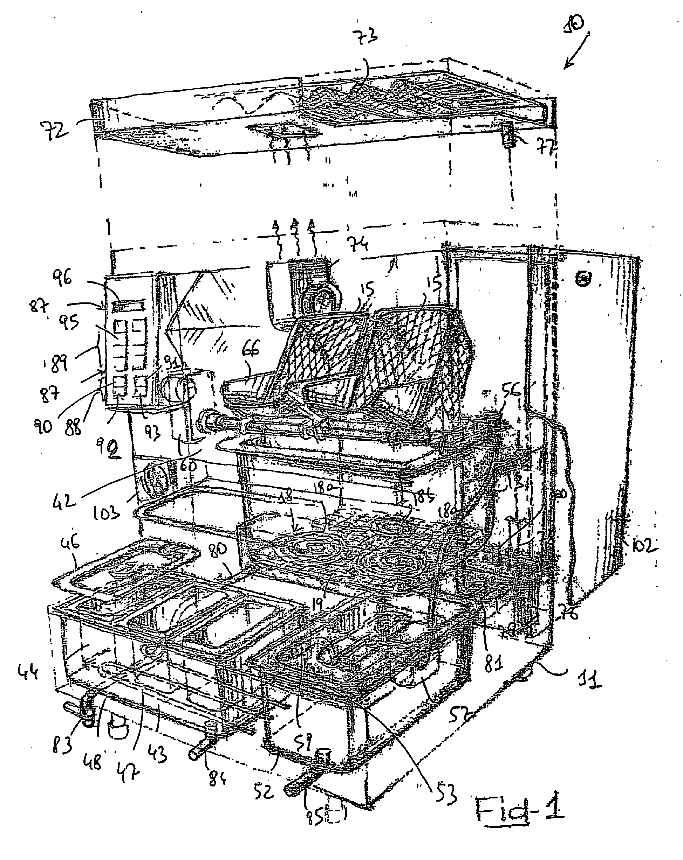

Figure 1 is an exploded, perspective view of a machine according to the invention for preparing ready-to-eat meals based on pasta;
Figure 2 is a side section view of the machine of figure 1;

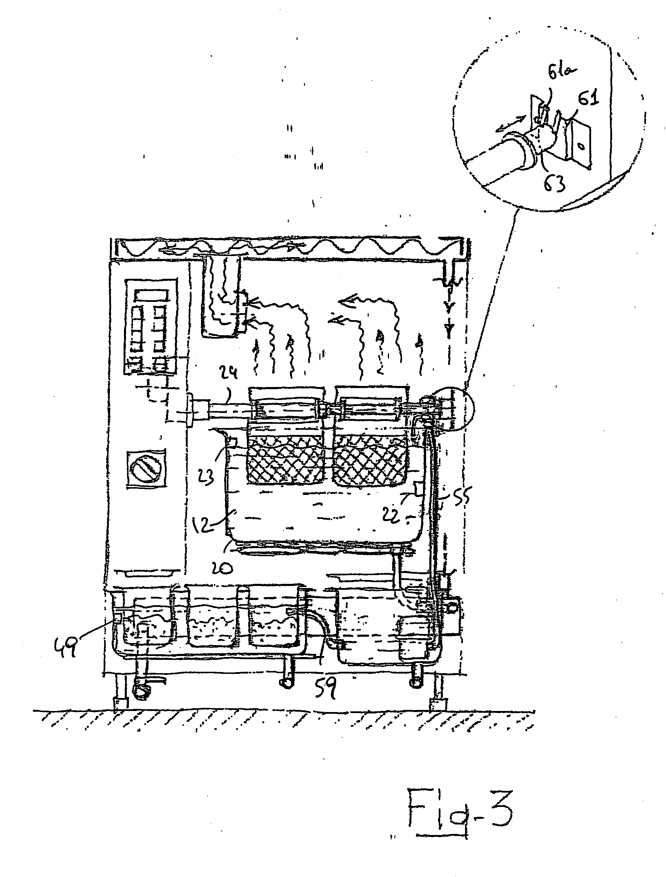

Figure 3 is a front section view of the machine of figure 1;

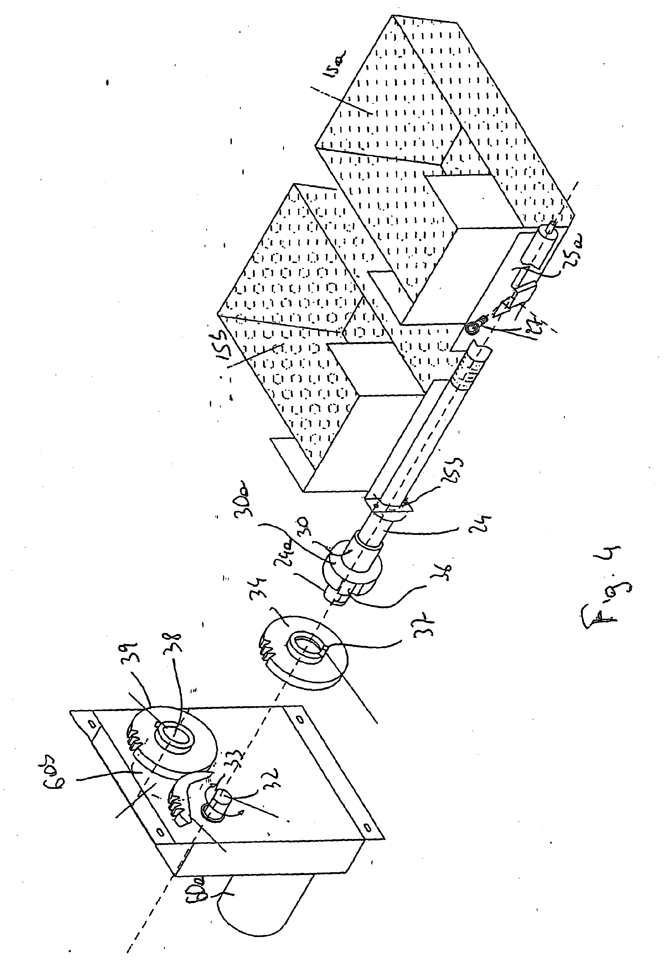

Figures 4 shows a detail of the machine of figure 1.

### DETAILED DESCRIPTION

Making reference to the above figures, a machine according to the invention for preparing ready-to-eat meals based on pasta is generally shown with the reference number 10. It comprises a box-like body 11 substantially L-shaped wherein different components of the machine are placed and supported, which are hereafter described.

In particular, the machine 10 comprises, in an upper part of the box-like body 11, a cooking vat 13 for containing heated water 12 necessary for cooking or tempering the pre-cooked, frozen pasta to the optimal conditions for immediate consumption and two perforated baskets 15 placed on the cooking vat 13.

According to the present invention, the cooking vat 13 is provided with means 18 for heating the water contained therein, assembled on the outer bottom 20 of the vat 13. In the present embodiment, the above heating means 18 are two main electric resistances 18a and a supplementary electric resistance 18b. Preferably, the above electric resistances 18a and 18b are welded on the outer bottom 20 of the vat 13 by means of brazing techniques, for example with nickel. Moreover, between the above resistances 18a and 18b and the outer bottom 20 of the vat 13 a net 19 of metallic material (e.g. steel) is preferably interposed, which covers the main, part of the surface of the outer bottom 20. This allows a more uniform distribution of the heat issued by the resistances 18a and 18b inside the vat 13. Inside the vat 20 a thermostat, schematically represented with the block 22, for controlling the temperature of the heated water 12 and a level sensor of the heated water 12, schematically represented by the block 23, are also provided.

The perforated baskets 15 are mounted in a rotary way on a primary shaft 24 by means of bearings 25. More in particular, in correspondence with a basket 15a a screw 27 is provided passing through a hole made in the primary shaft 24, which screw 27 interacts with the bearing 25a of the basket 15a so as to make this latter integral in rotation with the primary shaft 24. The other basket 15b is also rotary mounted on the primary shaft 24 but the relevant bearing 25b is tied to an end with the end of a secondary hollow shaft 30 coaxially mounted on the primary shaft 24. In this way, the basket 15b is integral in rotation with the secondary hollow shaft 30 and this rotation movement is completely independent from that of the group primary shaft 24/ basket 15a. In the light of the above, the baskets 15a and 15b are rotary with one another in an independent way. A spacer 26, for example a spring, is also advantageously provided between the baskets 15a and 15b.

The primary shaft 24 and the secondary hollow shaft 30 supporting the relevant baskets 15 are further connected, in a removable way, with motor means 60 in correspondence with respective end portions 24a and 30a. The end portion 24a of the primary shaft 24 is hollow-formed and it has a recess 37.

The motor means 60 are a first motor 60a and a second motor 60b placed side by side, one for each basket 15. The motor 60a is provided with a first shaft 32 having a superficial flattening 33 and a driven gear 34 neutrally mounted on the shaft 32. The driven gear 34 is in turn provided with a drafting tooth 35 of the secondary shaft 30 which engages in a recess 36 made on the end portion 30a of the secondary shaft 30.

The first shaft 32 of the first motor 60a engages in the portion 24a of the primary shaft 24 with the recess 37 which interacts with the flattening 33. In this way, the drive of the first motor 60a implies the rotation of the first shaft 32, which rotation is transmitted to the primary shaft 24 and to the basket associated therewith.

The second motor 60b is provided with a second shaft 38 whereon a driving gear 39 is integrally mounted which engages with the driven gear 34 of the first motor 60a. The drive of the second motor 60b implies the rotation of the second shaft 38 and of the driving gear 39. This rotation is transmitted from the driving gear 39 to the driven gear 34 and then to the secondary hollow shaft 30 and to the basket 15b associated therewith as effect of the engagement of the tooth 35 in the recess 36.

The opposite end 24b of the primary shaft 24 is instead housed in a removable way in a seat 61 formed on the upper portion of the box-like body 11. A safety springy compass 63 put on the primary shaft 24 together with suitable locks 61a of the seat 61 prevent the incidental detachment of the primary shaft 24 from the seat 61. In this way, the primary shaft 24, the secondary shaft 30 and the relevant baskets 15 are firmly kept all together in their operation position.

The shaft 24 with the relevant perforated baskets 15 and the cooking vat 13 are accessible from the outside by an operator through a window 42 frontally provided in the machine 10.

In the lower part of the box-like body 11, a water-bath 43 open on top outwards of the machine 10 is further provided. The water-bath 43 is intended for receiving a plurality of tubs 44 for suitable seasonings (e.g. sauce, meat sauce, etc.) and for containing heated water maintained at a constant temperature, generally around 70°C, for heating and maintaining at a suitable temperature the tubs 44 and the respective content. Moreover, the tubs 44 are shaped in such a way that the respective edge leans on the edge of the water-bath and all together substantially close the water-bath 43 in a sort of cover. The tubs 44 are in turn provided with a cover 46.

According to the present invention, the water-bath 43 is provided with means 47 for heating the water contained therein, preferably an electric resistance, mounted on the outer bottom 48 of the water-bath 43. Preferably, this electric resistance 47 is welded to the outer bottom 48 of the water-bath 43 by means of brazing techniques, for example with nickel. Inside the water-bath 43 a thermostat is further provided, schematically represented with the block 49, for controlling the temperature of the heated water.

Next to the water-bath 43, the machine 10 is further provided with a supplementary vat 52 accessible from the outside of the machine 10 and equipped with a cover 53. The supplementary vat 52 is loaded with water which is advantageously sent to the cooking vat 13, according to an automatic program, in order to restore the amount of water lost due to evaporation from the cooking vat 13 during the operation of the machine 10.

To this purpose, the supplementary vat 52 is in communication, through a flexible conduit 55, with a tap 56 mounted on the edge of the cooking vat 13 from which tap 56 the water coming from the supplementary vat 52 in introduced into the cooking vat 13. Moreover, a pump 57 is provided in the supplementary vat 52 to take water therefrom and to bring it through the conduit 55 and the tap 56 to the cooking vat 13. The presence of the tap 55 on the edge of the main vat advantageously allows to avoid any reflow of hot water from the cooking vat 13 to the supplementary vat 52, which could damage the pump 57.

The supplementary vat 52 is also in fluid communication with the water-bath 43 through a conduit 59. In particular, the end of the conduit 59 connected with the water-bath 43 is at a higher height than that of the opposite end of the conduit 59 connected with the supplementary vat 52. In this way, by introducing water only into the supplementary vat 52, the supplementary vat 52 and the water-bath 43 are loaded simultaneously with water and the water-bath 43 can receive, through the conduit 59, an amount of water enough to reach the necessary level for a correct heating of the tubs 44 and of the relevant content. At the same time, the level of the water in the water-bath 43 will be below the attachment point of the conduit 59 avoiding in this way any reflow of hot water from the water-bath 43 to the supplementary vat 52.

Let's go now to the operation of the above-described machine 10. First of all, for the operation starting of the machine 10, it is necessary to take care of the filling with water of the cooking vat 13 and of the supplementary vat 52.

In order to fill the cooking vat 13, it is first necessary to remove the primary shaft 24, the secondary shaft 30 and the relevant baskets 15. So as to do this, the operator can act on the safety compass 63 and simultaneously raise the primary shaft 24 up so as to unthread it from its leaning seat 61. Then the cooking vat 13 is filled until the level probe 23 is reached. At the end of the filling, the shaft 24 and the baskets 15 are replaced in their original position.

The filling of the supplementary vat 52 is performed by removing the proper cover 53 and thus by filling the supplementary vat 52 with water almost until the edge thereof is reached. Simultaneously, thanks to the connection conduit 59, also the filling with water of the water-bath will be obtained up to reaching an optimal level for the correct operation thereof. The cover 53 is then replaced on the supplementary vat 52.

Afterwards, energy is supplied to the electric resistances 18a so as to heat the water contained in the cooking vat 13 at the operation temperature (about 98°C). The temperature of the water is regulated by the thermostat 22 which automatically takes care of interrupting the supply of energy to the electric resistances 18a as soon as the water has reached the operation temperature and of restoring said supply as soon as the temperature of the water drops below the operation temperature.

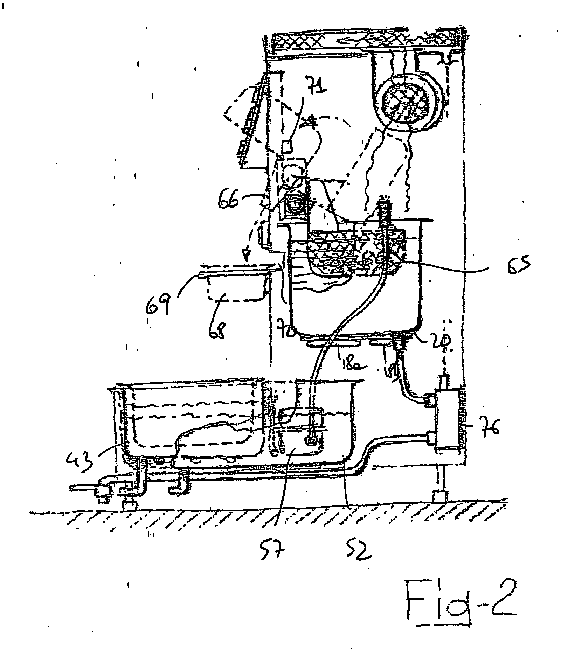

At this point the machine is ready for use. With particular reference to figure 2 the operation steps of one of the baskets 15 of the machine 10 are now described for convenience. As previously clarified, the baskets 15 work in the same way and independently. The pre-cooked, frozen pasta 65 is loaded in predetermined doses in the basket 15, which is in a raised position (shown with broken lines in figure 2) wherein it is removed from the cooking vat 13, i.e. it is above the free surface of the heated water 12 contained in the cooking vat 13. Each basket 15 allows a suitable dosing of pasta since it is shaped in order to contain a predetermined number of doses of pasta (one or more doses).

At this point, energy is supplied to the motor means 60 for lowering the basket 15 in the cooking vat 13 so that the pasta is totally immersed in water. After a predetermined reduced time wherein the pasta is thawed out and tempered or cooked under the optimal cooking conditions for immediate consumption, the motor means 60 are driven again to bring the basket 15 back to its loading raised position where the pasta thus tempered is strained. After a reduced straining time, the motor means 60 are driven for rotating the basket 15, outwards of the machine 10, from its raised position to a tilted position (also shown with broken lines in figure 2) wherein the heated pasta 65 is unloaded from the basket by gravity and it is directed through a mouth 66 into a container 68, for example a plate, for the final consumption.

Advantageously, the container 68 is put on a bearing 69 frontally mounted on the box-like body 11 of the machine 10 at a predetermined height. Just on the bearing 69, a recess 70 is advantageously formed in the box-like body 11 of such sizes as to house the edge of the container 68 collecting the heated pasta 65. In this way, containers of different sizes can be optimally arranged on the bearing.

The basket 15 is then brought through the motor means 60 back to the raised position ready to start another operation cycle as the one just described.

A timer, schematically represented with the block 71, is associated with the motor means 60 and it controls the residence time of the basket 15 in the various operation positions, discussed and shown.

As previously mentioned, in order to keep the level of the water in the cooking vat 13 constant, a level sensor is provided, in correspondence with the free surface of the water, schematically represented with the block 23, which is associated with the pump 57 provided in the supplementary vat 52. As soon as the level of the water in the cooking vat 13 drops below a predetermined value, the level sensor 23 allows the drive of the pump 57 so as to introduce water coming from the supplementary vat 52 into the cooking vat 13. The introduction of the water by means of the pump 57 is then interrupted as soon as the level sensor 23 detects the restoration of the pre determined level of the water in the cooking vat 13.

The other basket 15 not shown in figure 2 operates in the same way as the above described basket. In particular, the times 71 for controlling the operations of the baskets 15 can be programmed for operating the baskets 15 simultaneously or at different times.

Thus the machine, 10 can produce ready-to-eat meals based on pasta, starting from pre-cooked and frozen pasta, in an automated and fast sequence thanks to the operative movements of the baskets 15.

The operator must intervene only to load the pre-cooked, frozen pasta 65 into the machine 10 since all the subsequent steps are performed in an automated way thus making the preparation of the ready-to-eat meals based on pasta an extremely simple operation.

The capacity of the machine 10 according to the invention of keeping controlled the temperature of the heated water 12 through the thermostat 22 and the residence time of the pasta 65 in the heated water 12 through the timer 71, allows to obtain meals based on pasta under optimal cooking conditions for immediate consumption.

Therefore, the machine 10 according to the invention is particularly suitable for being used in the catering area, for example bars, cafés and fast-food restaurants.

Moreover, the steam evolving from the heated water 12 in the cooking vat 13 is conveyed into a chamber 72 wherein it is condensed through a grill 73. As indicated by the arrows, the steam is directed into the chamber 72 by forced convection through a centrifugal aspirator 74. The condensate which is formed in the chamber 72 is gathered on the bottom of the machine 10 in a collector 76 by passing by gravity through a hole 77 formed on the bottom of the chamber and a connection conduit 78. In this way, the steam with the odours associated therewith are advantageously entrapped in the collector 76 therefore without being dispersed in the environment wherein the machine 10 is installed. A breather pipe 100 for the air is further provided in the collector 76.

It is to be noted that the collector 76 is also connected, with the bottom of the cooking vat 13 through a conduit 79 and with an unloading conduit 80 arranged on the bottom of the machine. On the connection conduit 79, between the cooking vat 13 and the collector 76, a valve 81 is arranged with relevant control knob for allowing the unload of the heated water 12 from the cooking vat 13. The valve 8 1 is accessible by removing a port 102 of the machine 10. A safety valve 83 controlled by a suitable knob is further provided near the free end of the unloading conduit 80 and it is exposed outside on the front side of the machine 10 for allowing the unload of the heated water 12 together with the condensate gathered in the collector 76 outside the machine 10.

Also the water-bath 43 and the supplementary vat 52 are provided respectively with unloading conduits 84 and 85 whereon valves are interposed with respective control knobs (not shown).

Moreover, on the front side of the machine 10 there is a panel 87 which incorporates the electric and/or electronic components for controlling the operation of the machine 10.

More in particular, the front panel 87 comprises a lower group 88 of switches and an upper group 89 of switches.

The lower group 88 of switches comprises a switch 90 for turning the machine 10 on or off, a switch 91 for turning the supplementary resistance 18b on or off, a switch 92 for turning the electric resistance 47 on or off for heating the seasonings contained in the tubs 44 and a switch 93 for the pump 57. A general switch 103 is also provided.

The operation state of the machine 10 deriving from the activation of the above switches can be advantageously seen through a display 96 or suitable leds (not shown).

In particular, the switch 93 for the pump 57 advantageously allows to restore the operation of the pump 57 after having taken care of restoring water in the supplementary vat 52. In fact, the p-ump 57 normally operates in an automated way but, in case water were missing in the supplementary vat 52, the machine 10 is programmed in order to disconnect the pump 57 after a predetermined time during which the operator is advantageously warned of the lack of water by means of an acoustic advisor (not shown).

Instead the switch 91 can be advantageously driven for activating the supplementary resistance 18b if additional heat is needled for contrasting a possible excessive decrease of temperature of the heated water 12 in the cooking vat 13.

The upper group 89 of buttons provides two columns of switches 95, one for each basket 15, wherein each switch 95 of a column allows to set the timer 71 of a basket associated therewith with a predetermined cooking time of the pre-cooked pasta 65. The cooking time can be advantageously seen through the display 96 with deducting counting.

The main advantage of the machine 10 stays in that the cleaning and maintaining operations of the cooking vat are made particularly easy and fast by virtue of the fact that the heating electric resistances are placed outside the vat, thus avoiding depositing phenomena on the electric resistances and complicated disassembling operations for cleaning the same.

In this regard, it is first to be noted that the cleaning of the machine 10 can be advantageously performed only at the end of an operation cycle which normally provides different hours of operation (possibly continuous) of the machine 10 such as to satisfy the normal daily needs of canteens or collective catering.

Therefore, at the end of an operation cycle, the cleaning of the machine 10 is preceded by the unload of the water 12 from the cooking vat 13.

The operations of said unload first provide the removal of the port 102 of the box-like body 11 for the access to the valve 81, whose knob is rotated in the opening position and then the opening of the safety valve 83 by suitable rotating the respective knob being the connection of the end of the unloading conduit 80 to a vessel collecting the heated water 12 provided before, for example through a flexible tube (not shown). It is to be advantageously noted that the above operations also allow the unload, in the above vessel, of the condensate accumulated in the collector 76.

Going now back to the cleaning of the vat 10, once the heated water is unloaded, the shaft 24 is removed witch the relevant baskets 15 in the previously described way. At this point, the cooking vat 13 can be easily cleaned by means of normal detergents and possibly anti-limescale agents. In the same way, the supplementary vat 52 and the water-bath 43 can be easily cleaned after having previously removed the water therefrom.

The baskets 15 and the tubs 44 can be instead cleaned separately for example in a normal dishwasher.

A further advantage of the machine 10 according to the invention stays in its simple and practical use if it is particularly considered that the operator can easily perform the loading operations of the pre-cooked, frozen pasta in the baskets and he can simply access to the tubs for the seasonings and to the supplementary vat for loading the water which are advantageously placed in the lower part of the machine. Therefore, the machine according to the invention is suitable for being used by staff who is also non-expert and of any stature.

Another advantage of the machine 10 according to the invention stays in the simplicity of construction which particularly provides a simple system of movement of the baskets and in the reduced maintenance requirement. This also implies a reduction of the production and maintenance costs with respect to corresponding machines of the prior art.

Another advantage of the machine according to the invention stays in the high capacity of bringing, in reduced times, the cooking water back to the operation temperature through the supplementary electric resistance in case of a drop of the temperature well below the operation temperature due to a continuous use of the machine with massive doses of pre-cooked, frozen pasta. In this regard, the operator can connect or disconnect the supplementary electric resistance through a comfortable switch.

A technician of the field can bring several modifications and variations to the above described machine all within the scope of protection of the annexed claims.

## Claims

1. A machine (10) for preparing ready-to-eat meals based on pasta starting from pre-cooked, frozen pasta (65) comprising at least one basket (15) suitable for receiving predetermined doses of pre-cooked, frozen pasta, a cooking vat (13) containing water (12) heated by heating means (18), means (60) for moving said at least one basket (15) from an immersion position, wherein said at least one basket (15) is immersed in the heated water (12) contained in the cooking vat (13), for heating the pre-cooked, frozen pasta (65) and at least one raised position, wherein said at least one basket (15) is removed from the cooking vat (13), **characterised in that** said heating means (18) comprise at least one electric resistance (18a, 18b) fixed on the outer bottom (20) of the cooking vat (13).

2. A machine according to claim 1, wherein said at least one electric resistance (18a, 18b) is fixed on the outer bottom (20) of the cooking vat (13) by welding.

3. A machine according to claim 2, wherein said heating means (18) are made of two main electric resistances (18a) and a supplementary electric resistance (18b).

4. A machine according to any of the preceding claims, wherein said at least one raised position of said at least one basket (15) comprises an unload position wherein the heated pasta (65) is unloaded from said at least one basket (15) and an intermediate position between said unload position and said immersion position for loading said at least one basket (15) with predetermined doses of pre-cooked, frozen pasta and straining the heated pasta (65).

5. A machine according to any of the preceding claims, wherein said at least one basket (15) is driven in a rotary way by motor means (60).

6. A machine according to claim 5, comprising a first basket (15a) and a second basket (15b) rotary mounted on a primary shaft (24), the first basket being integral in rotation with the primary shaft (24) and the second basket (15b) being tied to a secondary hollow shaft (30) coaxially mounted on the primary shaft (24) and integral in rotation with said hollow coaxial shaft (30).

7. A machine according to claim 5 or 6, wherein said motor means comprise a fist motor (60a) and a second motor (60b) side by side with one another, one for each basket (15a, 15b), the first motor (60a) having a shaft (32) being engaged in a removable way with the primary shaft (24) and a driven gear (34) neutrally mounted on the primary shaft (24) and engaged in a removable way with the secondary hollow shaft (30), the second motor (60b) having a driving gear (39) which engages with the driven gear (34) of the first motor (60a).

8. A machine according to any of the preceding claims, comprising a timer (71) for each basket (15) for delaying, of a predetermined time, the movement of the basket (15) transmitted by the motor means when the basket (15) is in one of said unload, immersion and intermediate positions.

9. A machine according to any of the preceding claims, comprising thermostat means (22) in association with said heating means (18) for increasing and maintaining the water contained in the cooking vat (13) at a predetermined temperature.

10. A machine according to any of the preceding claims, comprising a water-bath (43) containing heated water and effective for receiving at least one container (44).

11. A machine according to claim 10, wherein said at least one container arranged in the water-bath (43) is made of a plurality of tubs (44) containing seasonings for the heated pasta (65).

12. A machine according to claim 10 or 11, comprising heating means (47) arranged on the outer bottom (48) of the water-bath and thermostat means (49) in association with said heating means (47) for increasing and maintaining the water contained in the water-bath (43) at a predetermined temperature.

13. A machine according to any of the preceding claims, comprising a supplementary vat (52) in fluid communication with the cooking vat (13) and means (57) for pumping water from the supplementary vat (52) to the cooking vat (13) so as to restore the amount of water lost due to evaporation from the cooking vat (13) when the heated water (12) contained therein reaches a minimum predetermined level.

14. A machine according to any of the preceding claims 10 to 13, wherein said water-bath (43) and said supplementary vat (52) are in fluid communication through a connection conduit (59) whose end connected with the water-bath (43) is at a higher height than the opposite end connected with the supplementary vat (52). ,

15. A machine according to any of the preceding claims, wherein the steam released by the heated water (12) contained in the cooking vat (13) is conveyed in at least one chamber (72) formed in the body (11) of the machine, said chamber (72) having a grill (73) for allowing the
steam to condense.

16. A machine according to claim 15, whose steam is conveyed in a forced way in said chamber (72) by means of a centrifugal aspirator (74).

17. A machine according to any of the preceding claims, comprising a collector (79) arranged near the bottom of the machine to collect said condensate, said collector (76) being connected with the outside of the machine by means of an unloading conduit (80) of the condensate.

18. A machine according to claim 17, wherein the cooking vat (13) is in fluid communication with the collector (76) by means of a conduit (79) so as to unload the heated water (12), according to the need, outwards of the machine by means of said unloading conduit (80).

19. A machine according to any of the preceding claims 13 to 18, comprising sensor means (23) for detecting the level of water (12) in the cooking vat (13), said sensor means (23) being associated with said pumping means (57) so as to allow a flow of water from the supplementary vat (52) to the cooking vat (13) when the heated water (12) in the cooking vat (13) reaches a minimum predetermined level.

20. A machine according to any of the preceding claims, wherein a window (42) is provided for the access to the baskets (15) for loading the pre-cooked, frozen pasta (65) and for allowing the automatic unload of the heated pasta outside the machine.

21. A machine according to any of the preceding claims, comprising a bearing (69) frontally mounted on the body of the machine for housing at least one container (68) suitable for receiving the heated pasta unloaded from the baskets (15) and a recess formed on the body of the machine (10) above said bearing (69) for housing the edge of said at least one container (68).

## Patentansprüche

1. Maschine (10) zur Vorbereitung von Fertiggerichten auf Nudelbasis, ausgehend von vorgegarten und tiefgefrorenen Nudeln (65), umfassend zumindest einen Korb (15), der geeignet zum Aufnehmen vorbestimmter Mengen von vorgekochten, tiefgefrorenen Nudeln ist, einer Kochwanne (13), die Wasser (12) enthält, welches durch Heizmittel (18) geheizt wird, Mittel (60) zum Bewegen zumindest eines Korbes (15) von einer Eintauchposition, in der zumindest ein Korb (15) in das in der Kochwanne (13) enthaltende geheizte Wasser (12) eingetaucht ist, zum Erhitzen der vorgekochten, tiefgefrorenen Nudeln (65), und zumindest einer erhöhten Position, in der zumindest ein Korb (15) aus der Kochwanne (13) entfernt ist, **dadurch gekennzeichnet, dass** die Heizmittel (18) zumindest einen elektrischen Widerstand (18a, 18b) umfassen, der an einem äußeren Boden (20) der Kochwanne (13) befestigt ist.

2. Maschine nach Anspruch 1, wobei der zumindest eine elektrische Widerstand (18a, 18b) am äußeren Boden (20) der Kochwanne (13) durch Schweißen befestigt ist.

3. Maschine nach Anspruch 2, wobei die Heizmittel (18) aus zwei elektrischen Hauptwiderständen (18a) und einem elektrischen Hilfswiderstand (18b) gebildet sind.

4. Maschine nach einem der vorherigen Ansprüche, wobei die zumindest eine erhöhte Position des zumindest einen Korbes (15) eine Entladeposition aufweist, in der die erhitzen Nudeln (65) von dem zumindest einen Korb (15) entladen werden, und eine Zwischenposition zwischen der Entladeposition und der Eintauchposition, zum Beladen des zumindest einen Korbes (15) mit vorbestimmten Mengen an vorgekochten, tiefgefrorenen Nudeln und zum Abtropfen der erhitzen Nudeln (65).

5. Maschine nach einem der vorherigen Ansprüche, wobei der zumindest eine Korb (15) durch Motormittel (16) in einer kreisförmigen Bewegung angetrieben wird.

6. Maschine nach Anspruch 5, umfassend einen ersten Korb (15a) und einen zweiten Korb (15b), die drehbar auf einer ersten Welle (24) befestigt sind, der erste Korb ist integral in Drehbewegung mit der ersten Welle (24) und der zweite Korb (15b) ist angebunden an eine koaxial an der ersten Welle (24) befestigten zweiten Hohlwelle (30) und integral in Drehbewegung mit der koaxialen Hohlwelle (30).

7. Maschine nach Anspruch 5 oder 6, wobei die Motormittel einen ersten Motor (60a) und einen zweiten Motor (60b), zueinander nebeneinander, umfassen, einen für jeden Korb (15a, 15b), der erste Motor (60) umfasst eine Welle (32), die lösbar mit der ersten Welle (24) in Eingriff ist, und ein angetriebenes Antriebsorgan (34), das neutral auf der ersten Welle (24) befestigt ist und lösbar mit der zweiten Hohlwelle (30) in Eingriff ist, der zweite Motor (60) umfasst ein antreibendes Antriebsorgan (39), welches mit dem angetriebenen Antriebsorgan (34) des ersten Motors (60a) in Eingriff ist.

8. Maschine nach einem der vorherigen Ansprüche, umfassend einen Zeitgeber (71) für jeden Korb (15), um die durch die Motormittel übertragene Bewegung des Korbes (15) um eine vorbestimmte Zeit zu verzögern, wenn der Korb (15) in einer der Entlade-, Eintauch- und Zwischenposition ist.

9. Maschine nach einem der vorherigen Ansprüche, umfassend Temperaturregelmittel (22) in Verbindung mit den Heizmitteln (18), zum Erhöhen und Erhalten des in der Kochwanne (13) enthaltenen Wassers in einer vorbestimmten Temperatur.

10. Maschine nach einem der vorherigen Ansprüche, umfassend ein Wasserbad (43), das beheiztes Wasser enthält und zur Aufnahme von zumindest einem Container (44) geeignet ist.

11. Maschine nach Anspruch 10, wobei der zumindest eine in dem Wasserbad (43) angeordnete Container aus einer Vielzahl von Wannen (44) gebildet ist, die Gewürze für die erhitzten Nudeln (65) beinhalten.

12. Maschine nach Anspruch 10 oder 11, umfassend Heizmittel (47), die an einem äußeren Boden (48) des Wasserbades angeordnet sind, und Temperaturregelmittel (49) in Verbindung mit den Heizmitteln (47), zum Erhöhen und Erhalten des im Wasserbad (43) enthaltenen Wassers in einer vorbestimmten Temperatur.

13. Maschine nach einem der vorherigen Ansprüche, umfassend eine Hilfswanne (52) in fluidischer Verbindung mit der Kochwanne (13) und Mittel (57) zum Fördern von Wasser von der Hilfswanne (52) zu der Kochwanne (13), so dass die durch Verdampfung aus der Kochwanne verlorene Menge an Wasser ersetzt wird, wenn das darin enthaltene geheizte Wasser (12) einen vorbestimmten Mindestfüllstand erreicht.

14. Maschine nach einem der vorherigen Ansprüche 10 bis 13, wobei das Wasserbad (43) und die Hilfswanne (52) durch eine Verbindungsleitung (59) in fluidischer Verbindung sind, deren mit dem Wasserbad (43) verbundenen Ende in einer höheren Höhe angeordnet ist als das entgegengesetzte mit der Hilfswanne (52) verbundenem Ende.

15. Maschine nach einem der vorherigen Ansprüche, wobei der von dem in der Kochwanne (13) enthaltenen geheizten Wasser (12) freigegebene Dampf an zumindest eine in dem Gehäuse (11) der Maschine ausgebildete Kammer (72) geleitet wird, wobei die Kammer (72) einen Rost (73) zum Ermöglichen einer Kondensierung des Dampfes umfasst.

16. Maschine nach Anspruch 15, deren Dampf durch einen Zentrifugalentlüfter (74) zwangsweise in die Kammer (72) geleitet wird.

17. Maschine nach einem der vorherigen Ansprüche, umfassend einen Auffänger (79), der in der Nähe des Bodens der Maschine angeordnet ist, um das Kondensat aufzufangen, der Auffänger (76) ist mit einem Äußeren der Maschine durch Mittel eines Entladekreislaufs (80) des Kondensats verbunden.

18. Maschine nach Anspruch 17, wobei die Kochwanne (13) durch Leitungsmittel (79) in fluidischer Verbindung mit dem Auffänger (76) ist, zum Entladen des beheizten Wassers (12) nach außerhalb der Maschine durch den Entladekreislaufs (80), entsprechend zum Bedarf.

19. Maschine nach einem der vorherigen Ansprüche 13 bis 18, umfassend Sensormittel (23) zum Erfassen des Füllstands von Wasser (12) in der Kochwanne (13), die Sensormittel (23) sind mit den Fördermitteln (57) verbunden, so dass ein Fluss von Wasser aus der Hilfswanne (52) zu der Kochwanne (13) ermöglicht wird, wenn das beheizte Wasser (12) in der Kochwanne einen vorbestimmten Minimalfüllstand erreicht.

20. Maschine nach einem der vorherigen Ansprüche, wobei ein Fenster (42) für einen Zugang zu den Körben (15) vorgesehen ist, zum Beladen der vorgekochten, tiefgefrorenen Nudeln (65) und zum Ermöglichen eines automatischen Entladens der erhitzten Nudeln nach außerhalb der Maschine.

21. Maschine nach einem der vorherigen Ansprüche, umfassend ein Lager (69), das frontseitig an dem Gehäuse der Maschine befestigt ist, um zumindest einen Container (68) zur Aufnahme der erhitzten Nudeln, die von den Körben (15) entladen werden, aufzunehmen und eine Ausnehmung, die oberhalb des Lagers (69) im Gehäuse der Maschine (10) ausgebildet ist, um eine Kante des zumindest einen Containers (68) aufzunehmen.

## Revendications

1. Machine (10) pour préparer des repas prêts à consommer à base de pâtes, en partant de pâtes pré-cuites surgelées (65) composé d'au moins un panier (15) adapté à recevoir des doses prédéterminées de pâtes pré-cuites surgelées, d'une cuve de cuisson (13) contenant de l'eau (12) chauffée par un moyen de chauffage (18), un moyen de déplacer le dit au moins un panier (15) d'une position immergée, dans laquelle le dit au moins un panier (15) est immergé dans l'eau chauffée (12) contenue dans la cuve de cuisson (13) pour chauffer les pâtes pré-cuites surgelées (65), à au moins une position relevée, dans laquelle le dit au moins un panier (15) est retiré de la cuve de cuisson (13), **caractérisée en ce que** le dit moyen de chauffage (18) comporte au moins une résistance électrique (18a, 18b) fixée sur le fond extérieur (20) de la cuve de cuisson (13).

2. Machine selon la revendication 1, **caractérisée en ce que** la dite au moins une résistance électrique (18a, 18b) est fixée sur le fond extérieur (20) de la cuve de cuisson (13) par soudage.

3. Machine selon la revendication 2, **caractérisée en ce que** le dit moyen de chauffage (18) est fait de deux résistances électriques principales (18a) et d'une résistance électrique supplémentaire (18b).

4. Machine selon l'une quelconque des revendications précédentes, **caractérisée en ce que** la dite au moins une position relevée du dit au moins un panier (15) comprend une position déchargée dans laquelle les pâtes chauffées (65) sont déchargées du dit au moins un panier (15) et une position intermédiaire entre la dite position déchargée et la dite position immergée pour charger le dit au moins un panier (15) avec des doses prédéterminées de pâtes pré-cuites surgelées et égoutter les pâtes chauffées (65).

5. Machine selon l'une quelconque des revendications précédentes, **caractérisée en ce que** le dit au moins un panier (15) est entraîné de manière rotative par un moyen moteur (60).

6. Machine selon la revendication 5, comprenant un premier panier (15a) et un deuxième panier (15b) montés de manière rotative sur un arbre primaire (24), le premier panier étant solidaire en rotation de l'arbre primaire (24) et le deuxième panier (15b) étant lié à un arbre secondaire creux (30) monté de manière coaxiale sur l'arbre primaire (24) et solidaire en rotation du dit arbre coaxial creux (30).

7. Machine selon la revendication 5 ou 6, **caractérisée en ce que** le dit moyen moteur comprend un premier moteur (60a) et un deuxième moteur (60b) l'un à côté de l'autre, un pour chaque panier (15a, 15b), le premier moteur (60a) ayant un arbre (32) engagé de manière rétractable avec l'arbre primaire (24) et un engrenage entraîné (34) monté de manière neutre sur l'arbre primaire (24) et engagé de manière rétractable avec l'arbre creux secondaire (30), le deuxième moteur (60b) ayant un engrenage d'entraînement (39) qui s'engage avec l'engrenage d'entraînement (34) du premier moteur (60a).

8. Machine selon l'une quelconque des revendications précédentes, comprenant un minuteur (71) pour chaque panier (15) pour retarder, d'un temps prédéterminé, le mouvement du panier (15) transmis par le moyen moteur quand le panier (15) est dans une des dites positions déchargée, immergée et intermédiaire.

9. Machine selon l'une quelconque des revendications précédentes, comprenant un moyen de thermostat (22) en association avec le dit moyen de chauffage (18) pour chauffer et maintenir l'eau contenue dans la cuve de cuisson (13) à une température prédéterminée.

10. Machine selon l'une quelconque des revendications précédentes, comprenant un bain-marie (43) contenant de l'eau chauffée et adapté à recevoir au moins un conteneur (44).

11. Machine selon la revendication 10, **caractérisée en ce qu'**au moins un conteneur placé dans le bain-marie (43) est fait d'une pluralité de bacs (44) contenant de l'assaisonnement pour les pâtes chauffées (65).

12. Machine selon la revendication 10 ou 11, comprenant un moyen de chauffage (47) placé sur le fond extérieur (48) du bain-marie et un moyen de thermostat (49) en association avec le dit moyen de chauffage (47) pour chauffer et maintenir l'eau contenue dans le bain marie (43) à une température prédéterminée.

13. Machine selon l'une quelconque des revendications précédentes, comprenant une cuve supplémentaire (52) en communication fluide avec la cuve de cuisson (13) et un moyen (57) pour pomper l'eau de la cuve supplémentaire (52) à la cuve de cuisson (13) de façon à restaurer la quantité d'eau perdue par évaporation dans la cuve de cuisson (13) quand l'eau chauffée (12) contenue à l'intérieur atteint un niveau minimal pré-déterminé.

14. Machine selon l'une quelconque des revendications précédentes 10 à 13, **caractérisée en ce que** le dit bain-marie (43) et la dite cuve supplémentaire (52) sont en communication fluide à travers un conduit de connexion (59) dont l'extrémité connectée au bain-marie (43) est à une hauteur supérieure à l'extrémité opposée connectée à la cuve supplémentaire (52).

15. Machine selon l'une quelconque des revendications précédentes, **caractérisée en ce que** la vapeur libérée par l'eau chauffée (12) contenue dans la cuve de cuisson (13) est convoyée dans au moins une chambre (72) formée dans le corps (11) de la machine, la dite chambre (72) ayant un grill (73) pour permettre à la vapeur de condenser.

16. Machine selon la revendication 15, dont la vapeur est convoyée de manière forcée dans la dite chambre (72) au moyen d'un aspirateur centrifuge (74).

17. Machine selon l'une quelconque des revendications précédentes, comprenant un collecteur (79) disposé à côté du fond de la machine pour collecter le dit condensat, le dit collecteur (76) étant connecté avec l'extérieur de la machine au moyen d'un conduit de déchargement (80) du condensat.

18. Machine selon la revendication 17, **caractérisée en ce que** la cuve de cuisson (13) est en communication fluide avec le collecteur (76) au moyen d'un conduit (79) de façon à décharger l'eau chauffée (12) selon les besoins, à l'extérieur de la machine au moyen du dit conduit de déchargement (80).

19. Machine selon l'une quelconque des revendications précédentes 13 à 18, comprenant un moyen de détection (23) pour détecter le niveau d'eau (12) dans la cuve de cuisson (13), le dit moyen de détection (23) étant associé avec le dit moyen de pompage (57) de façon à permettre à un flux d'eau de la cuve supplémentaire (52) à la cuve de cuisson (13) quand l'eau chauffée (12) dans la cuve de cuisson (13) atteint un niveau minimal prédéterminé.

20. Machine selon l'une quelconque des revendications précédentes, **caractérisée en ce qu'**une fenêtre (42) est prévue pour l'accès aux paniers (15) pour charger les pâtes pré-cuites surgelées (65) et pour permettre le déchargement automatique des pâtes chauffées à l'extérieur de la machine.

21. Machine selon l'une quelconque des revendications précédentes, comprenant un palier (69) monté frontalement sur le corps de la machine pour loger au moins un conteneur (68) adapté à recevoir les pâtes chauffées déchargées des paniers (15) et un renfoncement formé sur le corps de la machine (10) au-dessus du dit palier (69) pour loger le bord du dit au moins un conteneur (68).
